(19) Europäisches Patentamt
European Patent Office
Office européen des brevets

(11) EP 2 169 431 A2

(12) **EUROPEAN PATENT APPLICATION**

(43) Date of publication:
**31.03.2010 Bulletin 2010/13**

(51) Int Cl.:
***G01V 1/36*** *(2006.01)*

(21) Application number: **09171092.1**

(22) Date of filing: **23.09.2009**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(30) Priority: **24.09.2008 US 99845 P**
**05.08.2009 US 536369**

(71) Applicant: **Geco Technology B.V.**
**2586 BJ S'Gravenhage (NL)**

(72) Inventors:
- **Halliday, David Fraser**
  **Edinburgh, EH7 4DX (GB)**
- **Curtis, Andrew**
  **Edinburgh, EH16 4AW (GB)**

(74) Representative: **Suckling, Andrew Michael**
**Marks & Clerk LLP**
**Oxford Business Park South**
**Oxford, Oxfordshire, OX4 2RU (GB)**

(54) **Removing non-physical wavefields from interferometric green's functions**

(57) A method for estimating seismic data from sources of noise in the earth surrounding a first seismic receiver and a second seismic receiver. The method includes calculating a Green's function $G'(X_1, X_2)$ between a first seismic receiver $X_1$ and a second seismic receiver $X_2$ using interferometry. The first seismic receiver $X_1$ is located at a distance away from the second seismic receiver $X_2$. After calculating the Green's function $G'(X_1, X_2)$, the method may include steps for determining an estimate of one or more non-physical wavefields present in the Green's function $G'(X_1, X_2)$ and determining a filter to remove the non-physical wavefields from the Green's function $G'(X_1, X_2)$ based on the estimate of the non-physical wavefields. The filter may then be applied to the Green's function $G'(X_1, X_2)$ to obtain a Green's function $G''(X_1, X_2)$ free of non-physical wavefields.

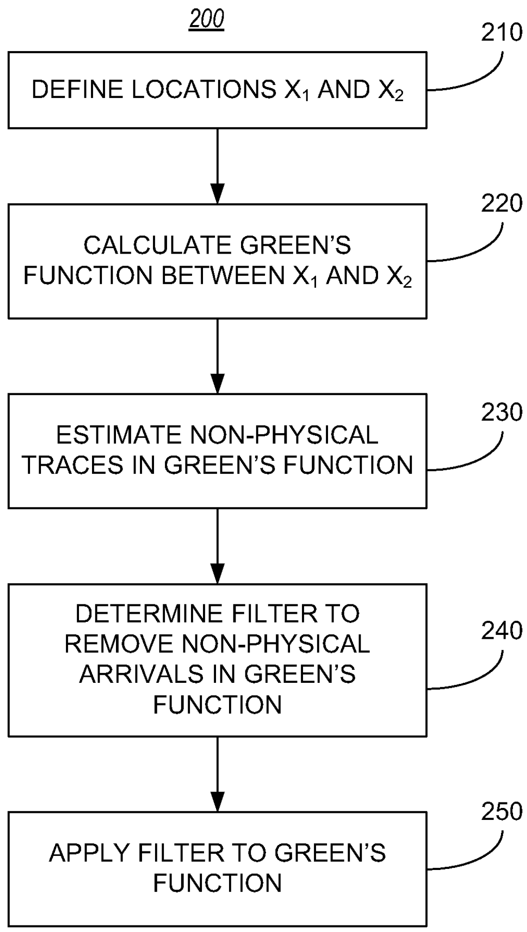


FIG. 2

EP 2 169 431 A2

## Description

## BACKGROUND

### Related Applications

**[0001]** [0001] This application claims priority to US provisional patent application serial number 61/099,845, filed September 24, 2008, titled INTERFEROMETRIC DIRECTIONAL BALANCING, NON-PHYSICAL WAVE PREDICTION AND REMOVAL which is incorporated herein by reference.

### Field of the Invention

Implementations of various technologies described herein generally relate to seismic data processing, and more particularly, to estimating seismic data using interferometric methods.

### Description of the Related Art

The following descriptions and examples are not admitted to be prior art by virtue of their inclusion within this section.

Seismic exploration is widely used to locate and/or survey subterranean geological formations for hydrocarbon deposits. Since many commercially valuable hydrocarbon deposits are located beneath areas of land and bodies of water, various types of land and marine seismic surveys have been developed to determine the locations of these hydrocarbon deposits.

In a typical land seismic survey, seismic sensors are installed in specific locations around the land in which hydrocarbon deposits may exist. Seismic sources, such as vibrators, may move across the land and produce acoustic signals, commonly referred to as "shots," directed down to the land, where they are scattered from the various subterranean geological formations. Scattered signals are received by the sensors, digitized, and then transmitted to a survey database. The digitized signals are referred to as seismograms and are recorded on the survey database.

In a typical marine seismic survey, seismic streamers are towed behind a survey vessel. The seismic streamers may be several thousand meters long and contain a large number of sensors, such as hydrophones, geophones, and associated electronic equipment, which are distributed along the length of the seismic streamer cable. The survey vessel may also include one or more seismic sources, such as air guns and the like. The seismic streamers may be in an over/under configuration, i.e., one set of streamers being suspended above another set of streamers. Two streamers in an over/under configuration, referred to as twin streamers, may be towed much deeper than streamers in a conventional single configuration.

As the seismic streamers are towed behind the survey vessel, acoustic signals, commonly referred to as "shots," produced by the one or more seismic sources are directed down through the water into strata beneath the water bottom, where they are scattered from the various subterranean geological formations. Scattered signals are received by the sensors, digitized, and then transmitted to the survey vessel. The digitized signals are referred to as seismograms and are recorded and at least partially processed by a signal processing unit deployed on the survey vessel.

The ultimate aim of these processes is to build a representation of the subterranean geological formations beneath the land or beneath the streamers. Analysis of the representation may indicate probable locations of hydrocarbon deposits in the subterranean geological formations.

## SUMMARY

Described herein are implementations of various technologies for removing non-physical wavefields from interferometrically obtained Green's functions. In one implementation, a method for estimating seismic data from sources of noise in the earth surrounding a first seismic receiver and a second seismic receiver may include calculating a Green's function $G'(X_1, X_2)$ between the first seismic receiver $X_1$ and the second seismic receiver $X_2$ using interferometry. The first seismic receiver $X_1$ is located at a distance away from the second seismic receiver $X_2$. After calculating the Green's function $G'(X_1, X_2)$, the method may include determining an estimate of one or more non-physical wavefields present in the Green's function $G'(X_1, X_2)$ and determining a filter to remove the non-physical wavefields from the Green's function $G'(X_1, X_2)$ based on the estimate of the non-physical wavefields. The filter may then be applied to the Green's function $G'(X_1, X_2)$ to obtain a Green's function $G''(X_1, X_2)$ free of non-physical wavefields.

In another implementation, a computer-readable storage medium may have computer-executable instructions which cause the computer to calculate a Green's function $G'(X_1, X_2)$ between a first seismic receiver $X_1$ and a second seismic receiver $X_2$ using interferometry. The first seismic receiver $X_1$ may be located at a distance away from the second

seismic receiver $X_2$, and after calculating the Green's function $G'(X_1, X_2)$, the computer-readable storage medium may split one or more wavefields received between the first seismic receiver $X_1$ and the second seismic receiver $X_2$ into one or more direct wavefields $G^0(X_1, X_2)$ and one or more scattered wavefields $G^{SC}(X_1, X_2)$. The direct wavefields $G^0(X_1, X_2)$ may be generated from one or more sources of noise surrounding the first seismic receiver $X_1$ and the second seismic receiver $X_2$, while the scattered wavefields $G^{SC}(X_1, X_2)$ may be generated from one or more anomalies in a subterranean medium. The computer-readable storage medium may then determine a contribution of the direct wavefields and the scattered wavefields to the Green's function $G'(X_1, X_2)$ such that the contribution may represent an estimate of one or more non-physical wavefields present in the Green's function $G'(X_1, X_2)$. The contribution may then be used by the computer-readable medium to determine a filter that may be used to remove the non-physical wavefields from the Green's function $G'(X_1, X_2)$. After determining the filter that may be used to remove the non-physical wavefields from the Green's function $G'(X_1, X_2)$, the computer-readable medium may then apply the filter to the Green's function $G'(X_1, X_2)$.

In yet another implementation, a computer system has a processor and a memory having program instructions executable by the processor to calculate a Green's function $G'(X_1, X_2)$ between a first seismic receiver $X_1$ and a second seismic receiver $X_2$ using interferometry. In order to calculate the Green's function $G'(X_1, X_2)$, the first seismic receiver $X_1$ may be located at a distance away from the second seismic receiver $X_2$. After calculating the Green's function $G'(X_1, X_2)$, the computer system may split one or more wavefields received between the first seismic receiver $X_1$ and the second seismic receiver $X_2$ into one or more direct wavefields $G^0(X_1, X_2)$ and one or more scattered wavefields $G^{SC}(X_1, X_2)$. Here, the direct wavefields $G^0(X_1, X_2)$ may be generated from one or more sources of noise surrounding the first seismic receiver $X_1$ and the second seismic receiver $X_2$ and the scattered wavefields $G^{SC}(X_1, X_2)$ may be generated from one or more anomalies in a subterranean medium. The computer system may then determine a contribution of the direct wavefields and the scattered wavefields to the Green's function $G'(X_1, X_2)$ such that the contribution may represent an estimate of one or more non-physical wavefields present in the Green's function $G'(X_1, X_2)$. Upon determining the contribution of the direct and scattered wavefields in the Green's function $G'(X_1, X_2)$, the computer system may determine a filter to remove the non-physical wavefields from the Green's function $G'(X_1, X_2)$ based on the estimate of the non-physical wavefields. The computer system may then apply the filter to the Green's function $G'(X_1, X_2)$ and determine the filtered Green's function $G'(X_1, X_2)$. The computer system may consider the filtered Green's function $G'(X_1, X_2)$ to be the seismic data received between the first seismic receiver $X_1$ and the second seismic receiver $X_2$ without interference from non-physical wavefields.

The claimed subject matter is not limited to implementations that solve any or all of the noted disadvantages. Further, the summary section is provided to introduce a selection of concepts in a simplified form that are further described below in the detailed description section. The summary section is not intended to identify key features or essential features of the claimed subject matter, nor is it intended to be used to limit the scope of the claimed subject matter.

## BRIEF DESCRIPTION OF THE DRAWINGS

Implementations of various technologies will hereafter be described with reference to the accompanying drawings. It should be understood, however, that the accompanying drawings illustrate only the various implementations described herein and are not meant to limit the scope of various technologies described herein.

Figure 1 illustrates a schematic diagram of one or more sources and receivers arranged in a single scatterer model in accordance with implementations of various techniques described herein.

Figure 2 illustrates a flow diagram of a method for removing non-physical wavefields from interferometrically obtained Green's functions in accordance with one or more implementations of various techniques described herein.

Figures 3A-3C illustrate a set of Green's functions with respect to the single scatterer model in accordance with one or more implementations of various techniques described herein.

Figure 4 illustrates a schematic diagram of one or more sources and receivers arranged in a two-scatterer model with uniform source strength distribution in accordance with implementations of various techniques described herein.

Figure 5 illustrates a flow diagram of a method for estimating non-physical wavefields from interferometrically obtained Green's functions using a moveout-based prediction method in accordance with one or more implementations of various techniques described herein.

Figures 6A-6E illustrate a set of Green's functions filtered according to a moveout-based prediction with respect to a two-scatterer model with uniform source strength distribution in accordance with one or more implementations of various techniques described herein.

Figure 7 illustrates a schematic diagram of one or more sources and receivers arranged in a multiple scatterer model in accordance with implementations of various techniques described herein.

Figures 8A-8D illustrate a set of Green's functions with respect to the multiple scatterer model in accordance with one or more implementations of various techniques described herein.

Figure 9 illustrates a computer network into which implementations of various technologies described herein may be implemented.

## DETAILED DESCRIPTION

The discussion below is directed to certain specific implementations. It is to be understood that the discussion below is only for the purpose of enabling a person with ordinary skill in the art to make and use any subject matter defined now or later by the patent "claims" found in any issued patent herein.

A homogeneous Green's function (the Green's function plus its time-reverse) between two points has been proven to be constructed from records of the Green's functions between each of those points and a surrounding boundary of energy sources without the need of a "shot" at either point. Here, the homogenous Green's function may show that both monopolar and dipolar boundary sources are useful, but only monopolar sources may be necessary if the boundary is sufficiently far away from the two points such that energy paths to each leave the boundary noise source approximately perpendicularly to the boundary. If the boundary sources are fired individually and sequentially, recordings made at the two locations may be cross-correlated and summed over boundary sources to obtain the inter-receiver homogeneous Green's function, and hence the inter-receiver Green's function.

Equivalent results may hold for diffusive (e.g., highly scattered) wavefields. Under a unified formulation of the theory it has been shown that other types of Green's functions, such as electrokinetic Green's functions in poroelastic or piezoelectric media, can be retrieved. Similar results may also hold for dissipative media and for monopolar random noise sources provided either that the boundary connecting the noise sources is sufficiently irregular (i.e., the noise source locations are sufficiently random), or is sufficiently far away from the receivers as described above. If neither of these conditions holds, then dipolar noise sources may need to be obtained.

Impulsive or noise source versions of the above theory created a new schema with which synthetic wavefields between receivers could be modeled flexibly. In an exploration setting and in the case of borehole receivers and surface sources, seismic interferometry may be used to re-datum both sources and receivers into the borehole, which may remove many undesirable near-surface related effects from the data. Major body wave components of Green's functions could be estimated using background (passive) noise records in a particularly quiet area (i.e., where surface generated noise is at a minimum).

In order to build the representation of the subterranean geological formations, seismic data may be processed. It is desirable to be able to develop a method to process the data more efficiently and to have a method and an apparatus to make this possible.

The following paragraphs provide a brief description of one or more implementations of various technologies and techniques directed at removing non-physical wavefields from interferometrically obtained Green's functions, where interferometry cannot be applied exactly. In one implementation, two seismic receivers may be defined at two different locations in a seismic survey area such that a Green's function may be estimated between the pair of seismic receivers. The Green's function may be calculated using interferometry and the surrounding noise sources. The calculated Green's function, however, may be biased due to the non-identical strengths of the surrounding noise sources. When removing the bias in the calculated Green's function, one or more representations of physical and non-physical energies received by the receivers may be embedded within the calculated Green's function.

In order to remove the non-physical energies from the calculated Green's function, the non-physical energies may be estimated using a wavefield-separation based prediction method. The wavefield-separation based prediction method may analyze the contribution of the physical direct and scattered waves to interferometrically constructed wavefields. Interferometry between the various combinations of the direct waves and scattered waves may result in four separate contributing terms: T1, T2, T3, and T4. These terms may represent the contributions resulting, respectively, from the cross-correlation of the direct waves received by a first receiver with the direct waves received by a second receiver, the direct waves received by the first receiver with the scattered waves received by the second receiver, the scattered waves received by the first receiver with the direct waves received by the second receiver, and the scattered waves received by the first receiver with the scattered waves received by the second receiver. In order to remove the non-physical energies from the calculated Green's functions, the term T4 is adaptively subtracted from the sum of all of the terms T1 - T4 (or where only scattered waves are desired, terms T2 - T4) because the term T4 represents an estimate of the non-physical energies. Therefore, the non-physical energies embedded in the calculated Green's functions may then be removed using a filter that may have been created using the term T4.

One or more implementations of various techniques removing non-physical wavefields from interferometrically obtained Green's functions will now be described in more detail with reference to Figures 1-9 in the following paragraphs.

Figure 1 illustrates a schematic diagram of one or more sources and receivers arranged in a single scatterer model 100 in accordance with implementations of various techniques described herein. In one implementation, the single scatterer model 100 may include one or more source signals $S_1$, a virtual source receiver $X_1$, one or more receivers $X_2$, and a scatterer location $SC_1$. The source signals $S_i$ may indicate a distribution of noise in a particular geographical area of the Earth. The distribution of noise may include seismic noise sources that naturally exist in the Earth. This may also represent the case where source signals $S_i$ may indicate a distribution of active sources deployed in an exploration-seismic survey. In this implementation, the strength of the source signals $S_i$ may be indicated by the size of the star on Figure 1. As such, the strength of the source signals $S_i$ may be strongest at [200, 0] of the X-Y axis, and the strength of the source signals $S_i$ may be weakest at [-200, 0].

The virtual source receiver $X_1$ and each receiver $X_2$ may represent a seismic sensor capable of measuring and recording seismic waves. In one implementation, the receivers $X_2$ may be arranged in a line, but in other implementations the receivers $X_2$ may be arranged in another manner. The virtual source receiver $X_1$ may represent a location in which a source may be simulated in order to obtain a Green's function interferometrically. The virtual source receiver $X_1$ and the receivers $X_2$ may be placed on a land terrain, on a sea surface, on a body of water with the use of one or more streamers, on a seabed, or in the subsurface (e.g., within a well).

The scatterer location $Sc_i$ may represent an anomaly in a particular geographical area of the Earth that may create a distortion in the seismic waves received by the receivers $X_2$. In one implementation, the anomaly may represent a change in the nature of the subterranean makeup of the Earth. As a result, after seismic waves from the sources $S_i$ reach the scatterer location $S_{C1}$, they may no longer travel in an expected manner with respect to the uniform characteristics of the surrounding subterranean medium. Instead, scattered waves may be created from the scatterer location $S_{C1}$ and then received by the receivers $X_1$ and $X_2$. The scatterer location $Sc_i$ may represent an isolated subterranean geological structure.

Figure 2 illustrates a flow diagram of a method 200 for removing non-physical wavefields from interferometrically obtained Green's functions in accordance with one or more implementations of various techniques described herein. The following description of method 200 is made with reference to the sources and receivers of Figure 1 in accordance with one or more implementations of various techniques described herein. Additionally, it should be understood that while the operational flow diagram indicates a particular order of execution of the operations, in some implementations, certain portions of the operations might be executed in a different order.

At step 210, seismic receivers may be defined at two or more locations such that a Green's function may be estimated between the receivers. In one implementation, a virtual source receiver $X_1$ may be placed in a specified location to denote the location of a virtual source in estimating a Green's function. A second seismic receiver $X_2$ may be placed at a distance away from the seismic receiver $X_1$. In one implementation, the second seismic receiver $X_2$ may consist of one or more seismic receivers arranged in a line such as the receiver $X_2$ as described in Figure 1.

At step 220, a Green's functions $G'(X_1, X_2)$ may be calculated between the virtual source receiver $X_1$ and the receiver $X_2$. In one implementation, the Green's function may be calculated using interferometry applied to the seismic recordings of the surrounding source signals $S_i$ from the receivers $X_1$ and $X_2$. Therefore, the Green's function $G'(X_1, X_2)$ may be biased due to the non-identical strengths of the sources $S_i$ surrounding the receivers $X_1$ and $X_2$. In one implementation, the Green's functions $G'(X_1, X_2)$ may be calculated in a space-time domain, but it may also be calculated in a variety of other domains such as the space-frequency domain and the like. After calculating the Green's function $G'(X_1, X_2)$ in a particular domain, the Green's function $G'(X_1, X_2)$ may be transformed into another domain (e.g. spatial wavenumber-frequency domain, time-radon domain) in order to perform additional data calculations or data processing.

In one implementation, the calculated Green's function $G'(X_1, X_2)$ may contain representations of physical and non-physical energies of the Earth's subterranean medium as recorded by the receivers $X_1$ and $X_2$. Non-physical energy may represent spurious waves that were generated due to the non-uniform strengths of the source signals $S_i$. The physicals waves are waves that would have been observed if a source had been placed at one of the receivers $X_1$ and $X_2$, and the non-physical waves are waves that appear in the interferometric estimates that would not have been observed if a source had been placed at one of the receivers $X_1$ and $X_2$. For instance, if the receivers $X_1$ and $X_2$ are surrounded by a set of evenly distributed source signals $S_i$, the Green's function $G'(X_1, X_2)$ may be created without the interference of the non-physical waves because non-physical waves created from one side of the source signals $S_i$ may be cancelled by equal non-physical waves created from the opposite side of the source signals $S_i$. However, when one or more source signals $S_i$ are missing, or their amplitudes are weaker than the rest (as seen in Figure 1), the physical waves represented in the obtained Green's function may be depleted in energy as compared with the true Green's function. Another effect of missing or weaker source signals $S_i$ may include the representation of some of the non-physical wave energy that may not have been cancelled effectively, and hence the non-physical wave energy may appear in the final Green's function estimate.

In one implementation, non-physical arrivals may be identified when a waveform arrives at the receivers $X_1$ and $X_2$ prior to the expected time in which the first physical waveform should arrive (e.g., prior to 0.1 seconds). These waveforms may be described as non-physical because they occur at times that are before the direct waves can physically arrive by physical wave propagation from the source signals $S_i$.

At step 230, the non-physical energy or wavefields within the Green's function $G'(X_1, X_2)$ may be estimated in order to create a filter to effectively remove the non-physical wavefields from the Green's function $G'(X_1, X_2)$.

In one implementation, the non-physical wavefield may be estimated using a wavefield-separation based prediction method. The wavefield-separation based prediction method may split the surface wavefields, received by the

receivers $X_1$ and $X_2$, into direct waves and scattered waves. The direct waves may be created from the source signals $S_i$, but the scattered waves may be created due to the scatterer location $S_{C1}$. Then, the wavefield-separation based prediction method may analyze the contribution of the direct waves and scattered waves to interferometrically constructed wavefields. Interferometry between the various combinations of the direct waves and scattered waves may result in four separate contributing terms: T1, T2, T3, and T4, each of which will be described in more detail below. These terms may represent the contributions resulting, respectively, from the cross-correlation of the direct waves received by receiver $X_1$ with the direct waves received by receiver $X_2$, the direct waves received by receiver $X_1$ with the scattered waves received by receiver $X_2$, the scattered waves received by receiver $X_1$ with the direct waves received by receiver $X_2$, and the scattered waves received by receiver $X_1$ with the scattered waves received by receiver $X_2$.

In one implementation, after splitting the wavefields received by the receivers $X_1$ and $X_2$, the direct wavefields between the receivers $X_1$ and $X_2$ may be defined as $G^0(X_1,X_2)$ and the scattered wavefields between the receivers $X_1$ and $X_2$ may be defined as $G^{SC}(X_1,X_2)$. The direct wavefields $G^0(X_1,X_2)$ and the scattered wavefields $G^{SC}(X_1,X_2)$ may be determined using a windowing or some other wavefield separation scheme on the calculated Green's function $G'(X_1, X_2)$. The Green's function $G^0(X_1,X_2)$ represents the direct wavefield or the seismic waves received by the receivers directly from the source signals $S_i$, and the Green's function $G^{SC}(X_1,X_2)$ represents the scattered wavefield or the seismic waves received by the receivers after they have been scattered from the scatterer location $S_{C1}$. In one implementation, the Green's function $G^{SC}(X_1, X_2)$ may include data pertaining to the scattered waves from one or more scatterer locations $Sc_1$.

The real energy recorded by the receivers should only include the Green's function $G^0(X_1,X_2)$ and the Green's function $G^{SC}(X_1,X_2)$ because no other energy exists in the single scatterer model 100. However, after cross-correlation is completed between various combinations of the direct waves and scattered waves in the interferometric calculation of the Green's function $G'(X_1, X_2)$ at each receiver ($X_1$ and $X_2$), scattered wavefields and non-physical wavefields may be visible in the obtained Green's function $G'(X_1, X_2)$. The scattered wavefields and non-physical wavefields may also be denoted in the contributing terms.

Term T1 may then be estimated after the direct waves recorded at both receivers $X_1$ and $X_2$ have been cross-correlated in the interferometric process in creating the Green's function $G'(X_1, X_2)$. Term T1 may be defined as:

$$T1 = G^{0*}(X_1,X_2) - G^0(X_1,X_2)$$

where $G^0(X_1,X_2)$ represents the direct wavefield between receivers $X_1$ and $X_2$ and $G^{0*}(X_1,X_2)$ represents the time-reversed direct wavefield between receivers $X_1$ and $X_2$ created from the cross-correlation step in the interferometric process.

Term T2 may be estimated after the direct waves recorded at the first receiver $X_1$ and the scattered waves recorded at the second receiver $X_2$ have been cross-correlated in the interferometric process in creating the Green's function $G'(X_1, X_2)$. Term T2 may be defined as

$$T2 = G^{sc*}(X_1,X_2) + G^{np1}(X_1,X_2)$$

where $G^{SC*}(X_1,X_2)$ represents the time-reversed scattered wavefield between receivers $X_1$ and $X_2$ and $G^{np1}(X_1,X_2)$ represents the non-physical wavefield between receivers $X_1$ and $X_2$ created from the cross-correlation step in the interferometric process.

Term T3 may be estimated after the scattered waves recorded at the first receiver $X_1$ and the direct waves recorded at the second receiver $X_2$ have been cross-correlated in the interferometric process in creating the Green's function $G'(X_1, X_2)$. Term T3 may be defined as

$$T3 = -G^{sc}(X_1,X_2) + G^{np2}(X_1,X_2)$$

where $G^{SC}(X_1,X_2)$ represents the scattered wavefield between receivers $X_1$ and $X_2$ and $G^{np2}(X_1,X_2)$ represents the non-physical wavefield between receivers $X_1$ and $X_2$ created from the cross-correlation step in the interferometric process. $G^{np2}(X_1,X_2)$ and $G^{np1}(X_1,X_2)$ can contain different non-physical arrivals, but the combination of both of these terms represents the total non-physical wavefield.

Term T4 may be estimated after the scattered waves recorded at the first receiver $X_1$ and the direct waves recorded at the second receiver $X_2$ have been cross-correlated in the interferometric process in creating the Green's function G'($X_1$, $X_2$). Term T3 may be defined as

$$T4 = -G^{np1}(X_1,X_2) - G^{np2}(X_1,X_2)$$

where $G^{np1}(X_1,X_2)$ represents the non-physical wavefield between receivers $X_1$ and $X_2$ and $G^{np2}(X_1,X_2)$ represents the non-physical wavefield between receivers $X_1$ and $X_2$ created from the cross-correlation step in the interferometric process. Hence the term T4 represents the total non-physical wavefield. When interferometry is applied, the term T4 mutually cancels the non-physical terms T2 and T3.

In one implementation, if the source signals $S_i$ have a uniform strength distribution at each location, the non-physical wavefield $G^{np1}(X_1,X_2)$ and the non-physical wavefield $G^{np2}(X_1,X_2)$ should cancel out when all of the terms T1, T2, T3, and T4 are added together. Therefore, the result of the summation of the terms T1 - T4 (or T2 - T3) should include the direct and scattered wavefields without the non-physical wavefields. In certain configurations, such as when a scatterer location $Sc_1$ lies on the extension of the inter-receiver path which may extend out beyond the receiver in either direction, the term T4 may also contribute towards the physical wavefields (direct or scattered) even though it may otherwise include non-physical wavefields. In such cases, the physical wavefield contribution is expected to be very small.

However, if the source signals $S_i$ do not have a uniform strength distribution at each location, then the amplitudes of the four terms T1 - T4 may vary, and the non-physical wavefields may not necessarily cancel out which may result in the introduction of the non-physical wavefields into the interferometric Green's function estimates.

In another implementation, the non-physical wavefields may also be estimated using a moveout-based prediction method as described in Figures 5-6. Although estimating non-physical wavefields have been described to be performed using a wavefield separation or a moveout-based prediction method, it should be understood that the non-physical wavefields may be estimated in one or more other methods.

At step 240, a filter may be created to remove the non-physical wavefields from the Green's function G'($X_1$, $X_2$) based on the estimate of the non-physical wavefields obtained in step 230. In one implementation, the filter may be designed to adaptively subtract the term T4 from the sum of all of the terms T1 - T4 because the term T4 represents an estimate of the non-physical wavefields. The filter may be created in the same domain in which the Green's function G' ($X_1$, $X_2$) may have been transformed to in step 220. The filter may be created using matching filters, least-square filters, helical filters, or any other appropriate type of filter.

At step 250, the filter may be applied to the Green's function G'($X_1$, $X_2$) to obtain a filtered Green's function G"($X_1$, $X_2$). The filtered Green's function G"($X_1$, $X_2$) may include less non-physical wavefields as compared with the original Green's function G'($X_1$, $X_2$) between receiver $X_1$ and $X_2$. In one implementation, the filtered Green's function G"($X_1$, $X_2$) may then be transformed back into the domain in which the Green's function G'($X_1$, $X_2$) may have been originally obtained in at step 220.

Figures 3A-3C illustrate a set of Green's functions 300 with respect to the single scatterer model in accordance with one or more implementations of various techniques described herein. The following description of the set of Green's functions 300 is made with reference to the sources and receivers of Figure 1 and method 200 of Figure 2.

Figure 3A represents the interferometrically obtained Green's function G'($X_1$, $X_2$) obtained at step 220 based on the single scatterer model 100. In one implementation, the curve 310 represents the direct wavefield received by the receivers $X_1$ and $X_2$ directly from the source signals $S_i$. The curve 320 represents the scattered wavefield received by the receivers $X_1$ and $X_2$ from the scatterer location $Sc_1$. In one implementation, the scattered wavefield typically occurs after the direct wavefield is received. The curve 330 represents the non-physical wavefields that appears after interferometrically estimating the Green's function G'($X_1$, $X_2$), using a non-uniform source strength distribution. In this example, the non-physical wavefields may be identified as the wavefields that occur prior to the arrival of the direct wavefield which may occur because the source signals $S_i$ may have varying amplitudes.

Figure 3B represents a directly modeled Green's function G($X_1$, $X_2$) based on the single scatterer model 100. The directly modeled Green's function G($X_1$, $X_2$) may be obtained without the use of interferometry and is shown here for comparison purposes only. In one implementation, the curve 340 represents the direct wavefield received by the receivers $X_1$ and $X_2$ directly from the source signals $S_i$. The curve 350 represents the scattered wavefield received by the receivers $X_1$ and $X_2$ from the scatterer location $Sc_1$. Since the Green's function G($X_1$, $X_2$) is obtained through direct modeling, the non-physical wavefields may not be present in the Green's function G($X_1$, $X_2$). In one implementation, the directly modeled Green's function G($X_1$, $X_2$) may represent an ideal or the correct Green's function G($X_1$, $X_2$) obtained from a single scatterer model 100. Although in this implementation the Green's function G($X_1$, $X_2$) is described to have been directly modeled from the source signals $S_i$, it should be noted that the Green's functions G($X_1$, $X_2$) may not need

to be directly modeled from the source signals $S_i$ in order to estimate the non-physical wavefields as described in this disclosure.

Figure 3C represents the difference between the interferometrically obtained Green's function $G'(X_1, X_2)$ and the directly modeled Green's function $G(X_1, X_2)$ after the data from each receiver $X_1$ and $X_2$ has been normalized to a maximum amplitude. In one implementation, Figure 3C represents the error present in the interferometrically obtained Green's function $G'(X_1, X_2)$. The curve 360 indicates the error in the direct wavefield included in the Green's function $G'(X_1, X_2)$. The curve 370 indicates the error in the scattered wavefield included in the Green's function $G'(X_1, X_2)$. The curve 360 indicates the error in the non-physical wavefields included in the Green's function $G'(X_1, X_2)$.

In another implementation, Figure 4 illustrates a schematic diagram of one or more sources and receivers arranged in a two-scatterer model 400 with uniform source strength distribution in accordance with implementations of various techniques described herein. In one implementation, the two-scatterer model 400 may be used to estimate the non-physical wavefields that may be present in an area with a moveout-based prediction method. The two-scatterer model 400 may include one or more source signals $S_i$, one or more receivers $X_i$, and two scatterer locations $Sc_1$ and $Sc_2$. The source signals $S_i$ and the scatterer locations $Sc_1$ and $Sc_2$ may correspond to the descriptions provided in Figure 1.

The receivers $X_i$ may represent one or more seismic sensors capable of measuring and recording seismic waves. In one implementation, the receivers $X_i$ may be arranged in a line, but in other implementations the receivers $X_i$ may be arranged in another manner.

Figure 5 illustrates a flow diagram of a method 500 for estimating non-physical wavefields from interferometrically obtained Green's functions using a moveout-based prediction method in accordance with one or more implementations of various techniques described herein. The following description of method 500 is made with reference to the two-scatterer model 400 of Figure 4 and the set of Green's functions 600 of Figure 6 in accordance with one or more implementations of various techniques described herein. Additionally, it should be understood that while the operational flow diagram indicates a particular order of execution of the operations, in some implementations, certain portions of the operations might be executed in a different order.

At step 510, a central receiver ($X_1$) of the receivers $X_i$ may be designated to be a virtual source. Although, in this implementation a central receiver may have been selected to be the virtual source, in other implementations, the virtual source may be selected to be any one of the receivers $X_i$.

At step 520, a Green's function $G'(X_1, X_i)$ may be interferometrically calculated between the receiver $X_1$ at the virtual source location and each receiver $X_i$.

At step 530, the wavefield-separation terms T2 and T3 may be calculated using the direct wavefields and the scattered wavefields received between the receiver $X_1$ and the receiver $X_i$ as described in step 230 of Figure 2.

At step 540, the sum of the wavefield-separation terms T2 and T3 calculated at step 530 may be plotted on a graph. The plotted graph with the sum of the wavefield-separation terms T2 and T3 for the Greens' function $G'(X_1, X_i)$ of the two-scatterer model 600 is illustrated in Figure 6B which will be described in more detail in the paragraphs below. Although in this implementation the sum of the wavefield-separation terms may be plotted on a graph, it should be noted that in other implementations the sum of the wavefield-separation terms may not be plotted on a graph to estimate the non-physical wavefields in an interferometrically obtained Green's function.

At step 550, the virtual source and receiver locations may be switched and a Green's function $G'(X_i, X_1)$ between each receiver $X_i$ (new virtual source location) and the receiver $X_1$ may be calculated using interferometry.

At step 560, the wavefield-separation terms T2 and T3 may be calculated using the direct wavefields and the scattered wavefields received between the receiver $X_i$ and the receiver $X_1$ as described in step 230 of Figure 2.

At step 570, the wavefield-separation terms T2 and T3 may be plotted on a graph. The plotted graph with the sum of the wavefield-separation terms T2 and T3 for the Greens' function $G'(X_i, X_1)$ of the two-scatterer model 400 is illustrated in Figure 6C, which will be described in more detail in the paragraphs below. Although in this implementation the sum of the wavefield-separation terms may be plotted on a graph, it should be noted that in other implementations the sum of the wavefield-separation terms may not be plotted on a graph to estimate the non-physical wavefields in an interferometrically obtained Green's function.

At step 580, the difference between the plotted graph with the sum of the wavefield-separation terms T2 and T3 for the Greens' function $G'(X_1, X_i)$ determined at step 540 (Figure 6B) and the sum of the wavefield-separation terms T2 and T3 for the Greens' function $G'(X_i, X_1)$ determined at step 570 (Figure 6C) may be plotted on another graph. The plotted graph with the difference between Figure 6B and Figure 6C is illustrated in Figure 6E. The resulting plotted graph describes complementary means to identify the non-physical wavefields.

Figures 6A-6E illustrate a set of Green's functions 600 filtered according to a moveout-based prediction method with respect to the two-scatterer model 400 with uniform source strength distribution in accordance with one or more implementations of various techniques described herein. The following description of the set of Green's functions 600 is made with reference to the two-scatterer model 400 of Figure 4 and the method 500 of Figure 5 in accordance with one or more implementations of various techniques described herein. In one implementation, the set of Green's functions 600 describes an alternate method of estimating the non-physical wavefields of a Green's function $G'(X_1, X_i)$ as opposed

to the wavefield-separation based prediction method as described at step 230 in Figure 2.

Figure 6A illustrates a plot of the sum of the wavefield-separation terms T2, T3 and T4 for a virtual source $X_1$ located at the center of the receivers $X_i$. In one implementation, the plot may illustrate the scattered waves received by the virtual source receiver $X_1$ and the receivers $X_i$ (subject to small numerical implementation errors). The curves 610 may illustrate the physical scattered wavefields recorded by the receivers $X_1$ and $X_i$. The non-physical wavefields may not be illustrated in the plot because they may have been cancelled out from the summation of the terms T2, T3, and T4.

Figure 6B illustrates a plot of the sum of the wavefield-separation terms T2 and T3 for a virtual source $X_1$ located at the center of the receivers $X_i$ as explained in step 540 of the method 500. In one implementation, the curve 620 illustrates the non-physical wavefield as received by the receiver $X_1$ at the center of the receivers $X_i$.

Figure 6C illustrates a plot of the sum of the wavefield-separation terms T2 and T3 for a virtual source located at any receiver $X_i$ and at a receiver $X_1$ located at the center of the receivers $X_i$ as explained in step 570 of the method 500. In one implementation, the curve 630 illustrates the non-physical wavefield as received by any receiver $X_i$ and the receiver $X_1$ at the center of the receivers $X_i$. Since the virtual source $X_i$ and the receiver $X_1$ are switched in determining the terms T2 and T3, the non-reciprocal nature of the non-physical wavefield is indicated by the curve 630 as compared to the curve 620. Therefore, Figure 6C illustrates that while the physical scattered wavefields (as shown in Figure 6A) may be unchanged due to reciprocity, the non-physical wavefields have been time-reversed when the virtual source and the receiver have been switched in the Green's function $G'(X_1, X_i)$ to $G'(X_i, X_1)$.

Figure 6D illustrates a plot of the sum of the wavefield-separation terms T2 and T3 of Figure 6B and Figure 6C. In one implementation, the physical wavefields of Figure 6B and Figure 6C constructively add together in Figure 6D along with the non-physical wavefields.

Figure 6E illustrates a plot of the difference between the wavefield-separation terms T2 and T3 of Figure 6B and Figure 6C as explained in step 580 of the method 500. In one implementation, the physical wavefields of Figure 6B and Figure 6C may be constructively removed in Figure 6E, but the non-physical wavefields may not because they do not cancel out. Therefore, the resulting plot describes complementary identifications of the non-physical wavefields.

In another implementation, Figure 7 illustrates a schematic diagram of one or more sources and receivers arranged in a multiple scatterer model 700 in accordance with implementations of various techniques described herein. In one implementation, the multiple scatterer model 700 may include one or more source signals $S_i$, a virtual source receiver $X_1$, one or more receivers $X_2$, and one or more scatterer locations $Sc_i$. The source signals $S_i$, the virtual source receiver $X_1$ and the receivers $X_2$, and the scatterer locations $Sc_i$ correspond to the descriptions provided in Figure 1 and Figure 4.

Figures 8A-8D illustrate a set of Green's functions 800 with respect to the multiple scatterer model in accordance with one or more implementations of various techniques described herein. The following description of the set of Green's functions 800 is made with reference to the multiple scatterer model 700 of Figure 7 and method 200 of Figure 2 in accordance with one or more implementations of various techniques described herein.

Figure 8A represents the interferometrically obtained Green's function $G'(X_1, X_2)$ obtained at step 220 based on the multiple scatterer model 400. In one implementation, curve 810 represents the direct wavefield received by the receivers $X_1$ and $X_2$ directly from the source signals $S_i$. Curves 820 represent the scattered wavefields received by the receivers $X_1$ and $X_2$ from the scatterer location $Sc_i$. In one implementation, a back-scattered wavefield typically occurs in the opposite direction with respect to curves 820 on the Figure 8A. Due to the biased source signals $S_i$, however, some of the scattered wavefields are not present in Figure 8A. The area 830 may indicate the expected location of the scattered wavefield. In one implementation, the interferometrically obtained Green's function $G'(X_1, X_2)$ may be corrected to display the presence of the back-scattered wavefields as indicated in Figure 8B. The curves in the area 840 may represent the non-physical wavefields that occurs when interferometrically estimating the Green's function $G'(X_1, X_2)$. The non-physical wavefields may be identified as the wavefields that occur prior to the arrival of the direct wavefield.

Figure 8B represents the interferometrically obtained Green's function $G'''(X_1, X_2)$ after the application of directional balancing based on the scatterer model 700. In one implementation, the area 850 represents the scattered wavefields received by the receivers $X_1$ and $X_2$ from the scatterer locations $Sc_i$ and from some other non-physical arrivals. After the application of directional balancing on the interferometrically obtained Green's function $G'(X_1, X_2)$, the back-scattered wavefields that were missing in the area 830 of Figure 8A may now be present in the area 850. However, after the application of directional balancing of the Green's function $G'(X_1, X_2)$, the curves in the area 860 indicating the non-physical wavefields may have gained signal strength in the directionally balanced Green's function $G'''(X_1, X_2)$ as compared to the signal strength of the non-physical wavefields as indicated in the area 840 of Figure 8A.

Figure 8C represents the filtered Green's function $G''(X_1, X_2)$ obtained from method 200 described in Figure 2. In one implementation, Figure 8C represents the best estimate of the directly modeled Green's function $G(X_1, X_2)$ as indicated in Figure 8D. The area 870 indicates a decreased strength in the non-physical wavefields as compared to the area 860 in Figure 8B. Although the non-physical wavefields have not been completely removed from the filtered Green's function $G''(X_1, X_2)$, the result is more accurate than that of the interferometrically obtained Green's function $G'(X_1, X_2)$ of Figure 8A and of the directionally balanced Green's function $G'''(X_1, X_2)$ after the application of directional balancing of Figure 8B.

Figure 8D represents a directly modeled Green's function $G(X_1, X_2)$ based on the multiple scatterer model 700. In one implementation, the curve 880 represents the direct wavefield received by the receivers $X_1$ and $X_2$ directly from the source signals $S_i$. The area 890 represents the scattered wavefields received by the receivers $X_1$ and $X_2$ from the multiple scatterer locations $Sc_i$. Since the Green's function $G(X_1, X_2)$ is obtained through direct modeling, the non-physical wavefields may not be present in the Green's function $G(X_1, X_2)$. In one implementation, the Green's function $G(X_1, X_2)$ may represent an ideal or the correct Green's function $G(X_1, X_2)$ obtained from a multiple scatterer model 700.

A method of the invention may be computer-implemented. Figure 9 illustrates a computer network 900 into which implementations of various technologies described herein may be implemented. In one implementation, the method for removing non-physical wavefields from interferometrically obtained Green's functions as described in Figure 2 and Figure 5 may be performed on the computer network 900. The computer network 900 may include a system computer 930, which may be implemented as any conventional personal computer or server. However, it should be understood that implementations of various technologies described herein may be practiced in other computer system configurations, including hypertext transfer protocol (HTTP) servers, hand-held devices, multiprocessor systems, microprocessor-based or programmable consumer electronics, network PCs, minicomputers, mainframe computers, and the like.

The system computer 930 may be in communication with disk storage devices 929, 931, and 933, which may be external hard disk storage devices. It is contemplated that disk storage devices 929, 931, and 933 are conventional hard disk drives, and as such, will be implemented by way of a local area network or by remote access. Of course, while disk storage devices 929, 931, and 933 are illustrated as separate devices, a single disk storage device may be used to store any and all of the program instructions, measurement data, and results as desired.

In one implementation, seismic data from the receivers may be stored in disk storage device 931. The system computer 930 may retrieve the appropriate data from the disk storage device 931 to process seismic data according to program instructions that correspond to implementations of various technologies described herein. Seismic data may include pressure and particle velocity data. The program instructions may be written in a computer programming language, such as C++, Java and the like. The program instructions may be stored in a computer-readable memory, such as program disk storage device 933. Such computer-readable media may include computer storage media and communication media.

Computer storage media may include volatile and non-volatile, and removable and non-removable media implemented in any method or technology for storage of information, such as computer-readable instructions, data structures, program modules or other data. Computer storage media may further include RAM, ROM, erasable programmable read-only memory (EPROM), electrically erasable programmable read-only memory (EEPROM), flash memory or other solid state memory technology, CD-ROM, digital versatile disks (DVD), or other optical storage, magnetic cassettes, magnetic tape, magnetic disk storage or other magnetic storage devices, or any other medium which can be used to store the desired information and which can be accessed by the computing system 900.

Communication media may embody computer readable instructions, data structures, program modules or other data in a modulated data signal, such as a carrier wave or other transport mechanism and may include any information delivery media. The term "modulated data signal" may mean a signal that has one or more of its characteristics set or changed in such a manner as to encode information in the signal. By way of example, and not limitation, communication media may include wired media such as a wired network or direct-wired connection, and wireless media such as acoustic, RF, infrared and other wireless media. Combinations of the any of the above may also be included within the scope of computer readable media.

In one implementation, the system computer 930 may present output primarily onto graphics display 927. The system computer 930 may store the results of the methods described above on disk storage 929, for later use and further analysis. The keyboard 926 and the pointing device (e.g., a mouse, trackball, or the like) 925 may be provided with the system computer 930 to enable interactive operation.

The system computer 930 may be located at a data center remote from the survey region. The system computer 930 may be in communication with the receivers (either directly or via a recording unit, not shown), to receive signals indicative of the reflected seismic energy. After conventional formatting and other initial processing, these signals may be stored by the system computer 930 as digital data in the disk storage 931 for subsequent retrieval and processing in the manner described above. While Figure 9 illustrates the disk storage 931 as directly connected to the system computer 930, it is also contemplated that the disk storage device 931 may be accessible through a local area network or by remote access. Furthermore, while disk storage devices 929, 931 are illustrated as separate devices for storing input seismic data and analysis results, the disk storage devices 929, 931 may be implemented within a single disk drive (either together with or separately from program disk storage device 933), or in any other conventional manner as will be fully understood by one of skill in the art having reference to this specification.

While the foregoing is directed to implementations of various technologies described herein, other and further implementations may be devised without departing from the basic scope thereof, which may be determined by the claims that follow. Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

## Claims

1. A computer-implemented method for estimating seismic data from sources of noise in the earth surrounding a first seismic receiver and a second seismic receiver, comprising:

   calculating a Green's function $G'(X_1, X_2)$ between a first seismic receiver $X_1$ and a second seismic receiver $X_2$ using interferometry, wherein the first seismic receiver $X_1$ is located at a distance away from the second seismic receiver $X_2$;
   determining an estimate of one or more non-physical wavefields present in the Green's function $G'(X_1, X_2)$;
   determining a filter to remove the non-physical wavefields from the Green's function $G'(X_1, X_2)$ based on the estimate of the non-physical wavefields; and
   applying the filter to the Green's function $G'(X_1, X_2)$.

2. The method of claim 1, further comprising determining the filtered Green's function $G'(X_1, X_2)$ to be the seismic data received between the first seismic receiver $X_1$ and the second seismic receiver $X_2$.

3. The method of claim 1, wherein the first seismic receiver $X_1$ and the second seismic receiver $X_2$ are located in a subterranean medium having one or more scatterer locations representing one or more anomalies in the subterranean medium.

4. The method of claim 3, wherein determining the estimate of the non-physical wavefields comprises:

   splitting one or more wavefields received between the first seismic receiver $X_1$ and the second seismic receiver $X_2$ into one or more direct wavefields $G^0(X_1, X_2)$ and one or more scattered wavefields $G^{SC}(X_1, X_2)$, wherein the direct wavefields $G^0(X_1, X_2)$ are generated from the sources of noise and the scattered wavefields $G^{SC}(X_1, X_2)$ are generated from the scatterer locations; and
   determining a contribution of the direct wavefields and the scattered wavefields to the Green's function $G'(X_1, X_2)$.

5. The method of claim 4, wherein determining the contribution comprises:

   calculating a term T1 by cross-correlating the direct wavefields received by the first seismic receiver $X_1$ with the direct wavefields received by the second seismic receiver $X_2$;
   calculating a term T2 by cross-correlating the direct wavefields received by the first seismic receiver $X_1$ with the scattered wavefields received by the second seismic receiver $X_2$;
   calculating a term T3 by cross-correlating the scattered wavefields received by the first seismic receiver $X_1$ with the direct wavefields received by the second seismic receiver $X_2$; and
   calculating a term T4 by cross-correlating the scattered wavefields received by the first seismic receiver $X_1$ with the direct wavefields received by the second seismic receiver $X_2$, wherein the term T4 represents the estimate of the non-physical wavefields.

6. The method of claim 5, wherein the term T1 is defined as $T1 = G^{0*}(X_1,X_2)\, G^0(X_1,X_2)$, wherein $G^0(X_1,X_2)$ represents the direct wavefields between the first seismic receiver $X_1$ and the second seismic receiver $X_2$ and wherein $G^{0*}(X_1, X_2)$ represents one or more negative direct wavefields between the first seismic receiver $X_1$ and the second seismic receiver $X_2$.

7. The method of claim 5, wherein the term T2 is defined as $T2 = G^{SC*}(X_1,X_2) + G^{np1}(X_1,X_2)$, wherein $G^{SC*}(X_1,X_2)$ represents one or more negative scattered wavefields between the first seismic receiver $X_1$ and the second seismic receiver $X_2$, and wherein $G^{np1}(X_1,X_2)$ represents a portion of the non-physical wavefields between the first seismic receiver $X_1$ and the second seismic receiver $X_2$.

8. The method of claim 5, wherein the term T3 is defined as $T3 = -G^{SC}(X_1,X_2) + G^{np2}(X_1,X_2)$, wherein $G^{SC}(X_1,X_2)$ represents the scattered wavefields between the first seismic receiver $X_1$ and the second seismic receiver $X_2$, and wherein $G^{np2}(X_1,X_2)$ represents a portion of the non-physical wavefields between the first seismic receiver $X_1$ and

the second seismic receiver $X_2$.

**9.** The method of claim 5, wherein the term T4 is defined as T4 = $-G^{np1}(X_1,X_2) - G^{np2}(X_1,X_2)$, wherein $G^{np1}(X_1,X_2)$ represents a first portion of the non-physical wavefields between the first seismic receiver $X_1$ and the second seismic receiver $X_2$, and wherein $G^{np2}(X_1,X_2)$ represents a second portion of the non-physical wavefields between the first seismic receiver $X_1$ and the second seismic receiver $X_2$.

**10.** The method of claim 5, wherein the first portion of the non-physical wavefields and the second portion of the non-physical wavefields are configured to cancel out when the terms T1, T2, T3 and T4 are added together and the sources of noise have uniform strengths.

**11.** The method of claim 5, wherein applying the filter comprises:

computing a sum of the terms T1, T2, T3 and T4; and
adaptively subtracting the term T4 from the sum.

**12.** The method of claim 1, wherein determining the estimate of the non-physical wavefields comprises:

calculating a first T2 by cross-correlating one or more direct wavefields received by the first seismic receiver $X_1$ with one or more scattered wavefields received by the second seismic receiver $X_2$;
calculating a first T3 by cross-correlating the scattered wavefields received by the first seismic receiver $X_1$ with the direct wavefields received by the second seismic receiver $X_2$;
plotting a sum of the first T2 and the first T3 on a first graph;
calculating a Green's function $G'(X_2, X_1)$ between the second seismic receiver $X_2$ and the first seismic receiver $X_1$ using interferometry;
calculating a second T2 by cross-correlating one or more direct wavefields received by the second seismic receiver $X_2$ with one or more scattered wavefields received by the first seismic receiver $X_1$;
calculating a second T3 by cross-correlating the scattered wavefields received by the second seismic receiver $X_2$ with the direct wavefields received by the first seismic receiver $X_1$;
plotting a sum of the second T2 and the second T3 on a second graph; and
plotting a difference between the first graph and the second graph, wherein the difference represents the non-physical wavefields.

**13.** The method of claim 1, wherein calculating the Green's function $G'(X_1, X_2)$ further comprises converting the Green's function $G'(X_1, X_2)$ into an unbiased Green's function $G''(X_1, X_2)$ using directional balancing.

**14.** The method of claim 1, further comprising:

transforming the Green's function $G'(X_1, X_2)$ from a first domain to a second domain after calculating the Green's function $G'(X_1, X_2)$; and
transforming the filtered Green's function $G'(X_1, X_2)$ to the first domain after applying the filter to the Green's function $G'(X_1, X_2)$.

**15.** A computer system, comprising:

a processor; and
a memory comprising program instructions executable by the processor to perform a method as in claims 1-14.

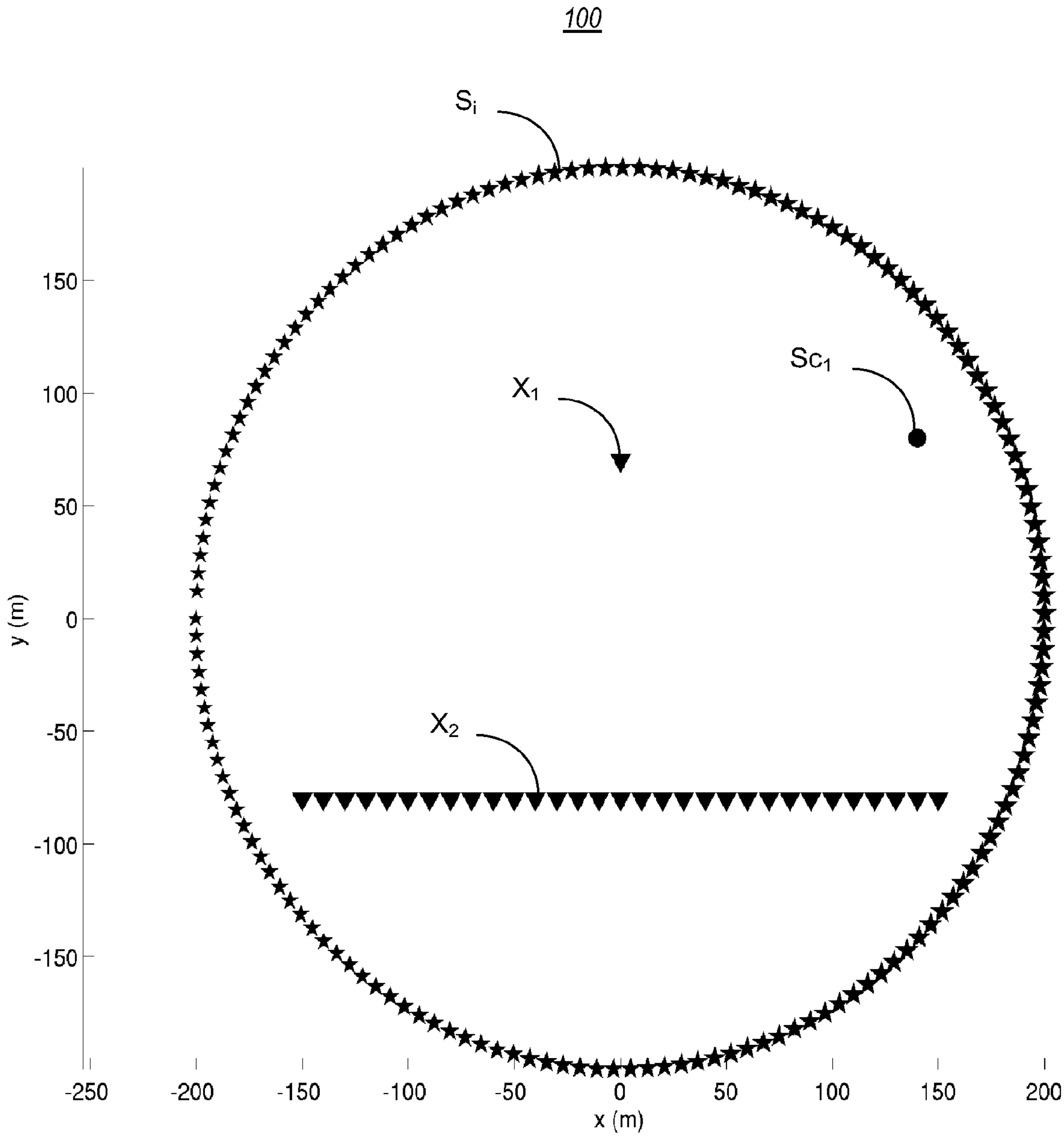
100
$S_i$
$Sc_1$
$X_1$
$X_2$
150
100
50
0
-50
-100
-150
y (m)
-250
-200
-150
-100
-50
0
50
100
150
200
x (m)

FIG. 1

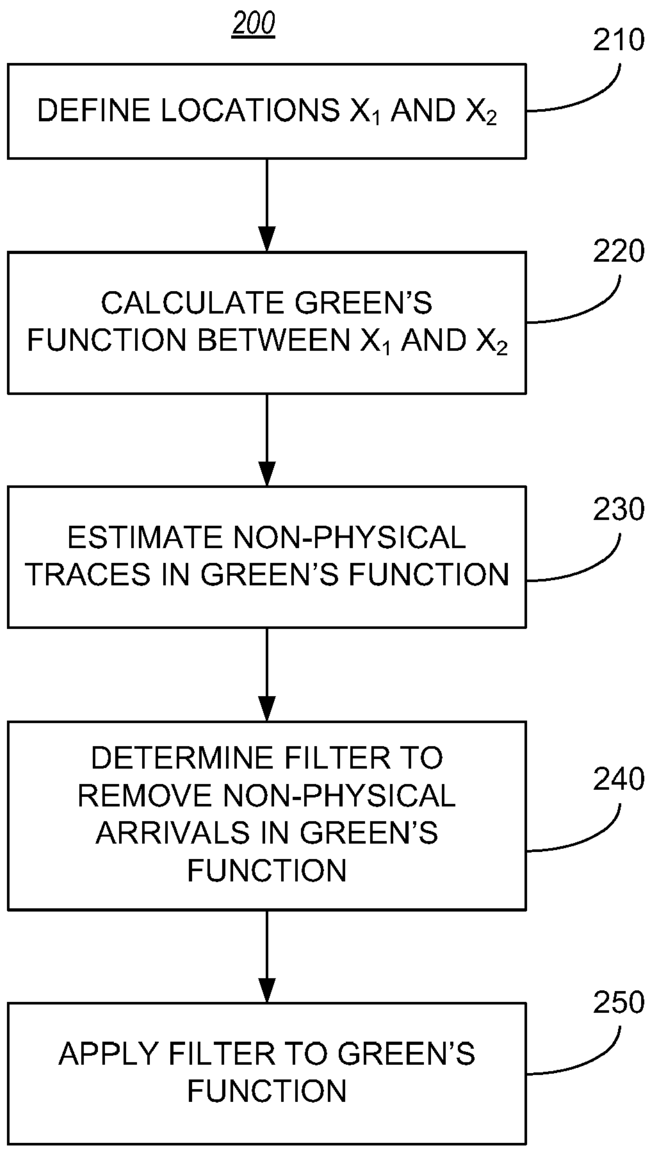
200
DEFINE LOCATIONS X1 AND X2
210
CALCULATE GREEN'S FUNCTION BETWEEN X1 AND X2
220
ESTIMATE NON-PHYSICAL TRACES IN GREEN'S FUNCTION
230
DETERMINE FILTER TO REMOVE NON-PHYSICAL ARRIVALS IN GREEN'S FUNCTION
240
APPLY FILTER TO GREEN'S FUNCTION
250

FIG. 2

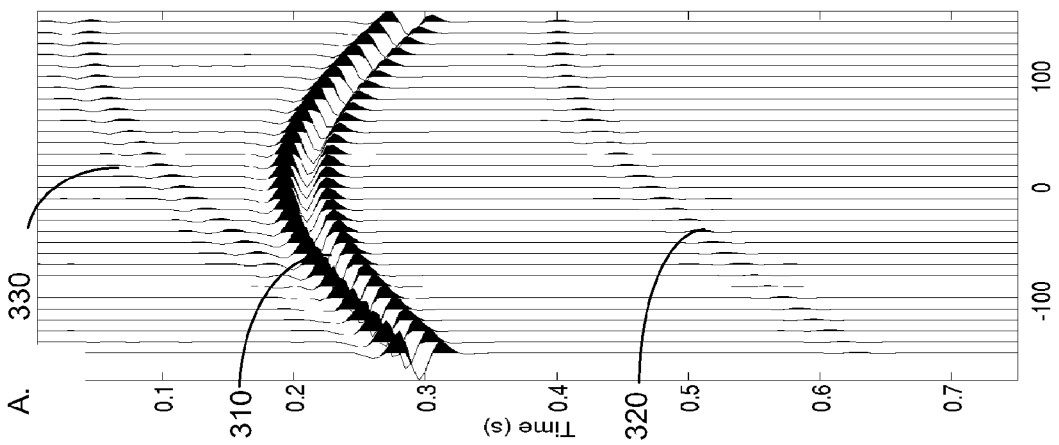


FIG. 3A

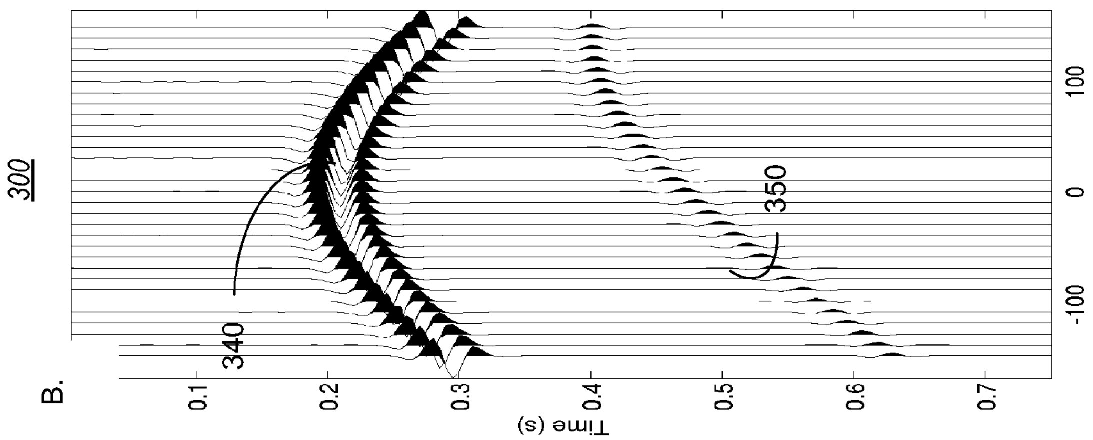


FIG. 3B

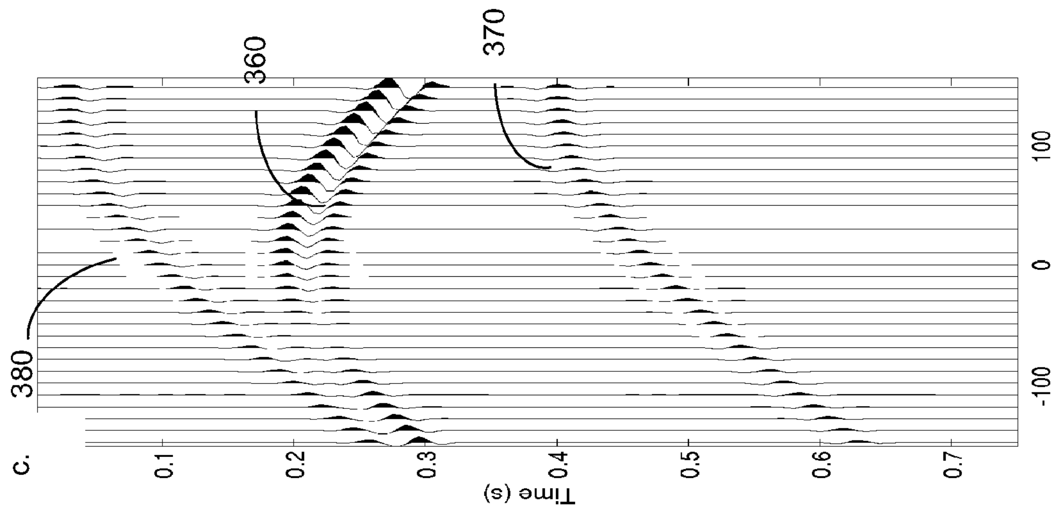


FIG. 3C

400

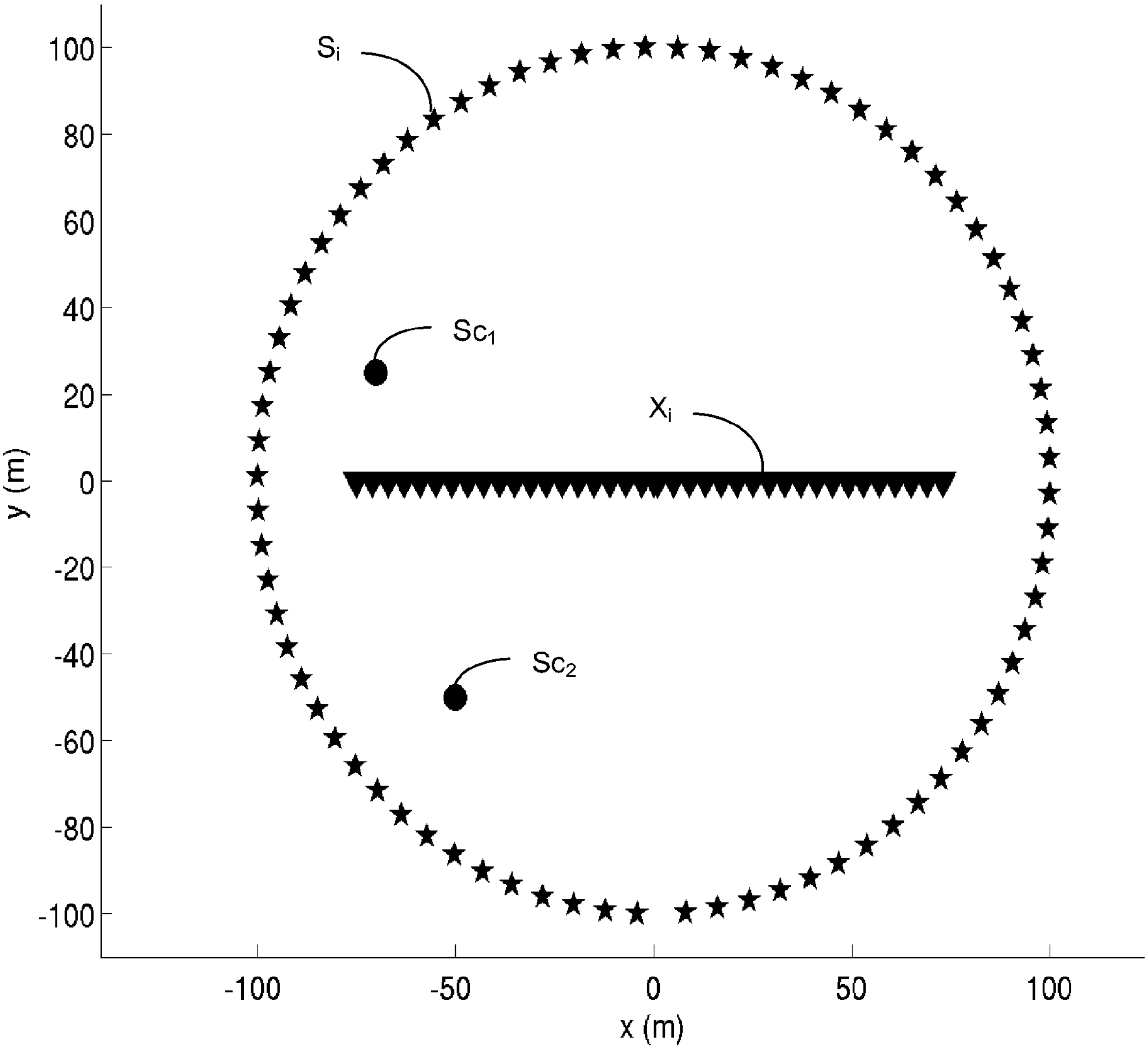


FIG. 4

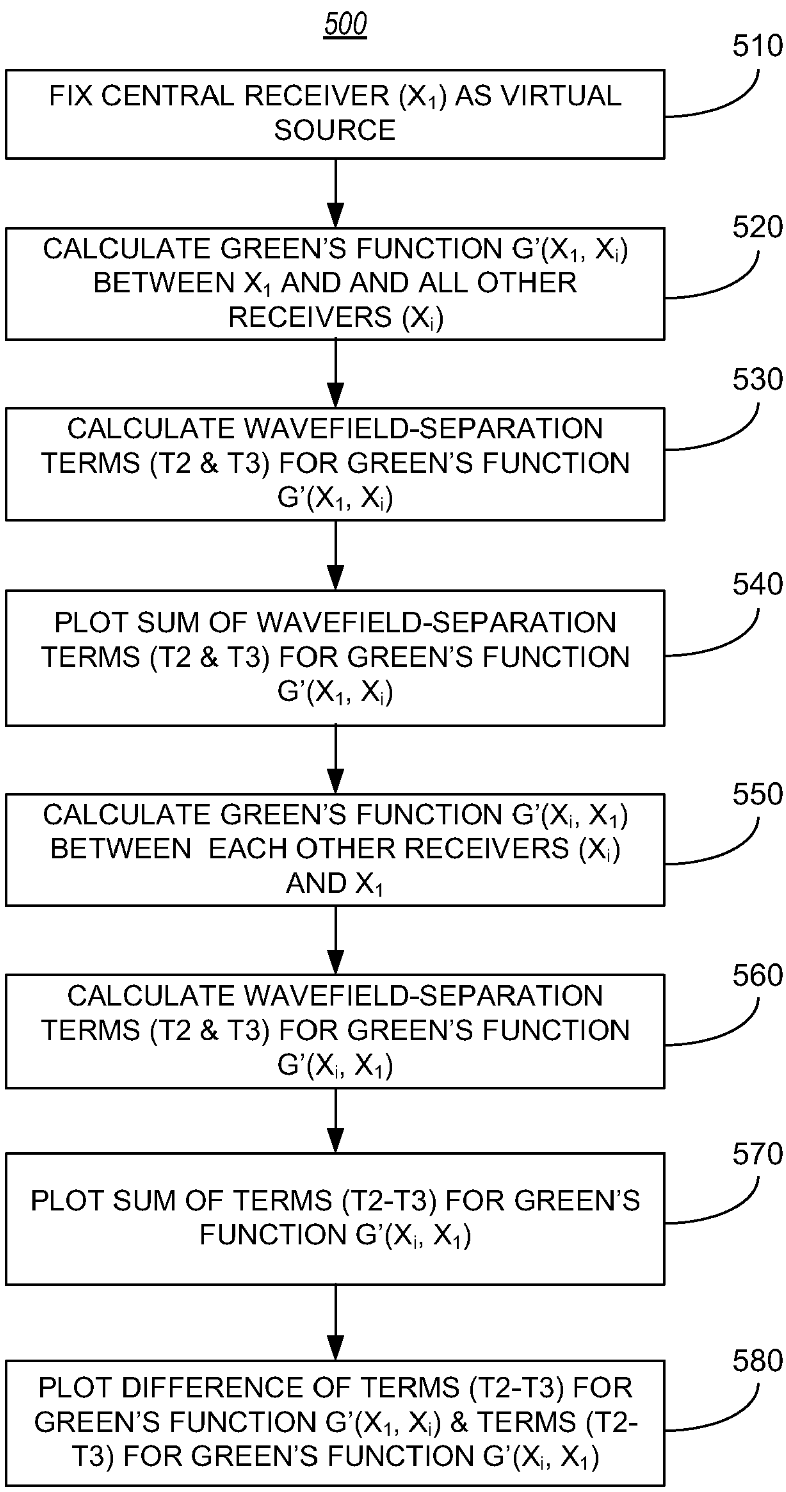
500
FIX CENTRAL RECEIVER ($X_1$) AS VIRTUAL SOURCE
510
CALCULATE GREEN'S FUNCTION G'($X_1$, $X_i$) BETWEEN $X_1$ AND AND ALL OTHER RECEIVERS ($X_i$)
520
CALCULATE WAVEFIELD-SEPARATION TERMS (T2 & T3) FOR GREEN'S FUNCTION G'($X_1$, $X_i$)
530
PLOT SUM OF WAVEFIELD-SEPARATION TERMS (T2 & T3) FOR GREEN'S FUNCTION G'($X_1$, $X_i$)
540
CALCULATE GREEN'S FUNCTION G'($X_i$, $X_1$) BETWEEN EACH OTHER RECEIVERS ($X_i$) AND $X_1$
550
CALCULATE WAVEFIELD-SEPARATION TERMS (T2 & T3) FOR GREEN'S FUNCTION G'($X_i$, $X_1$)
560
PLOT SUM OF TERMS (T2-T3) FOR GREEN'S FUNCTION G'($X_i$, $X_1$)
570
PLOT DIFFERENCE OF TERMS (T2-T3) FOR GREEN'S FUNCTION G'($X_1$, $X_i$) & TERMS (T2-T3) FOR GREEN'S FUNCTION G'($X_i$, $X_1$)
580

FIG. 5

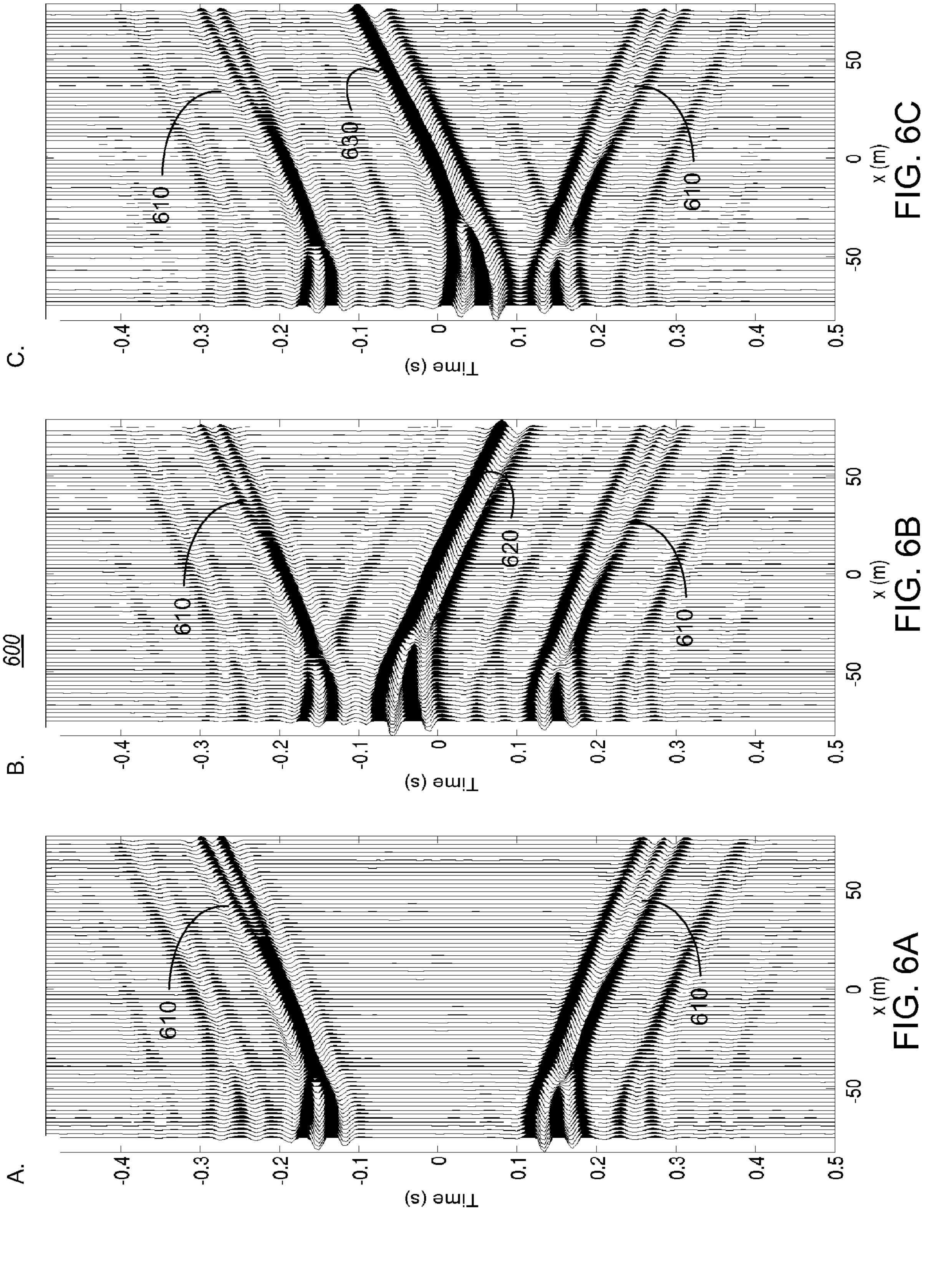
600
A.
B.
C.
Time (s)
-0.4
-0.3
-0.2
-0.1
0
0.1
0.2
0.3
0.4
0.5
x (m)
-50
0
50
610
620
630
FIG. 6A
FIG. 6B
FIG. 6C

600

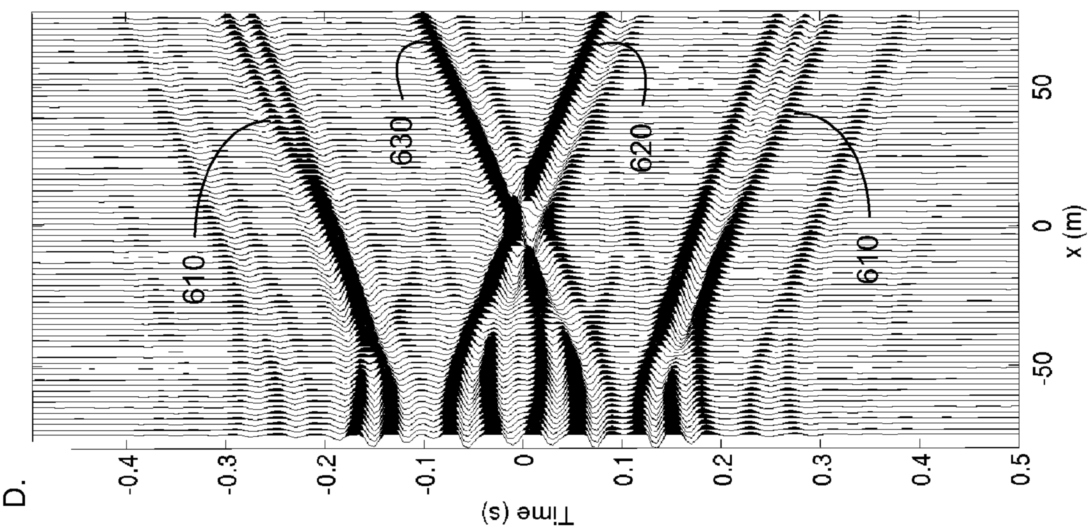


FIG. 6D

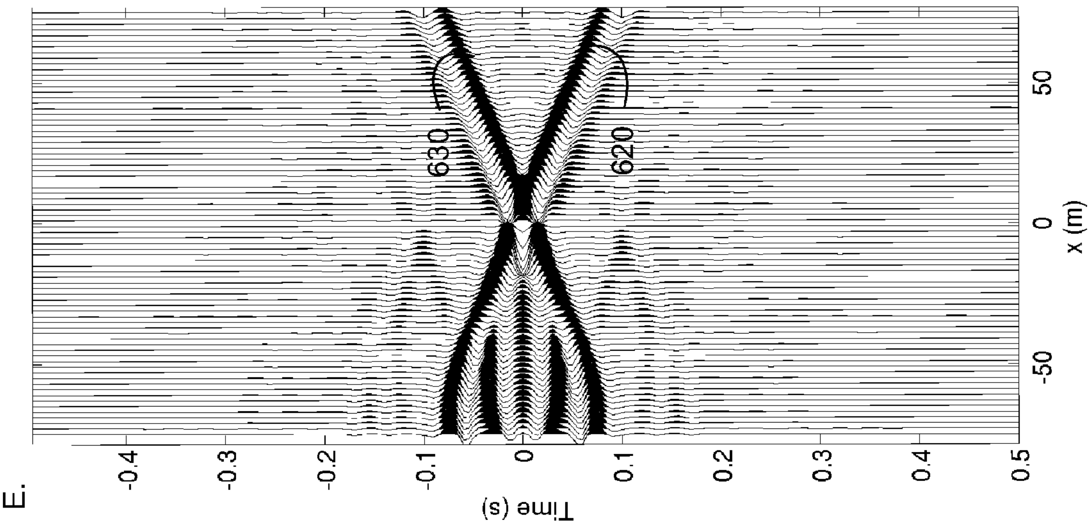


FIG. 6E

700

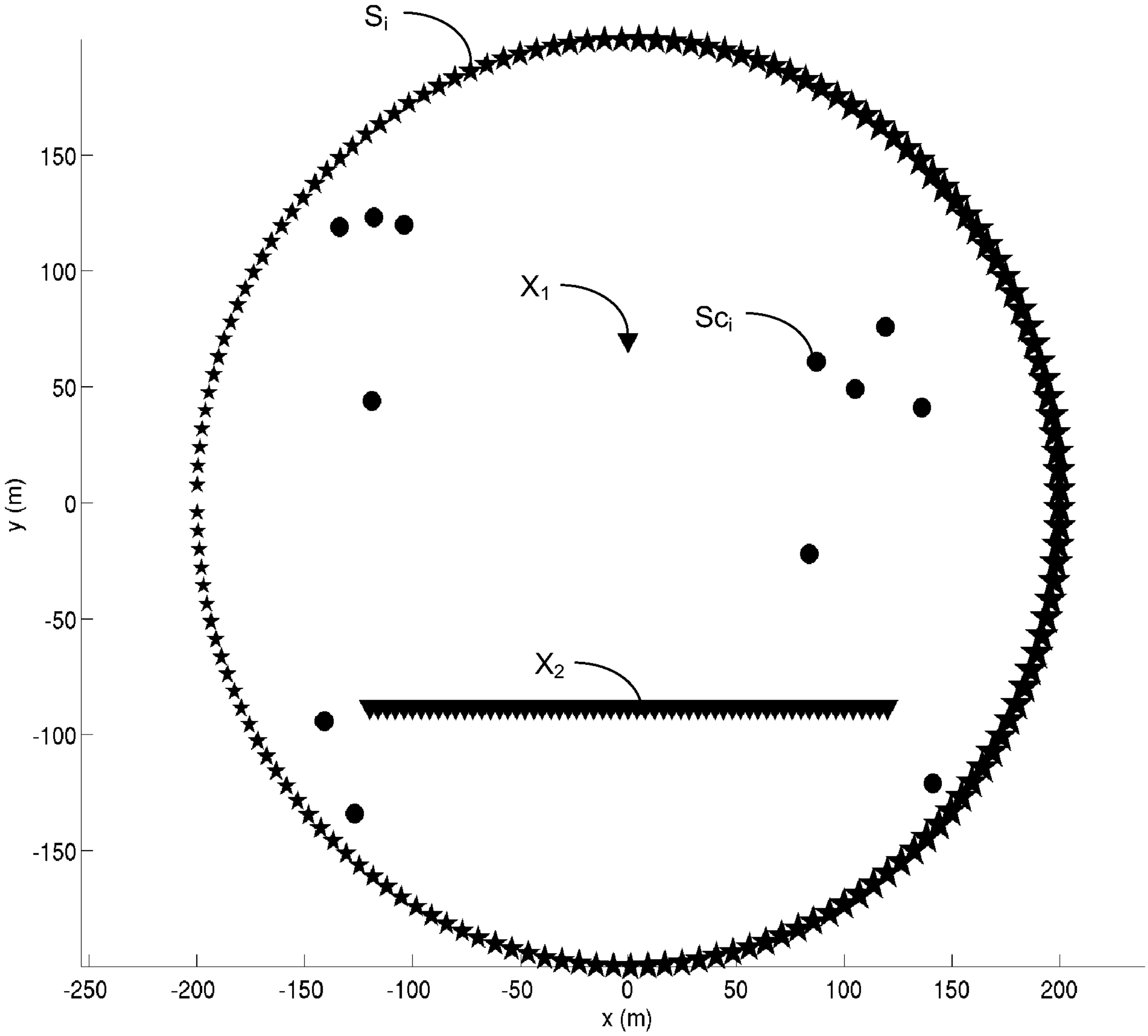

$S_i$
$X_1$
$Sc_i$
$X_2$
150
100
50
0
-50
-100
-150
y (m)
-250
-200
-150
-100
-50
0
50
100
150
200
x (m)


FIG. 7

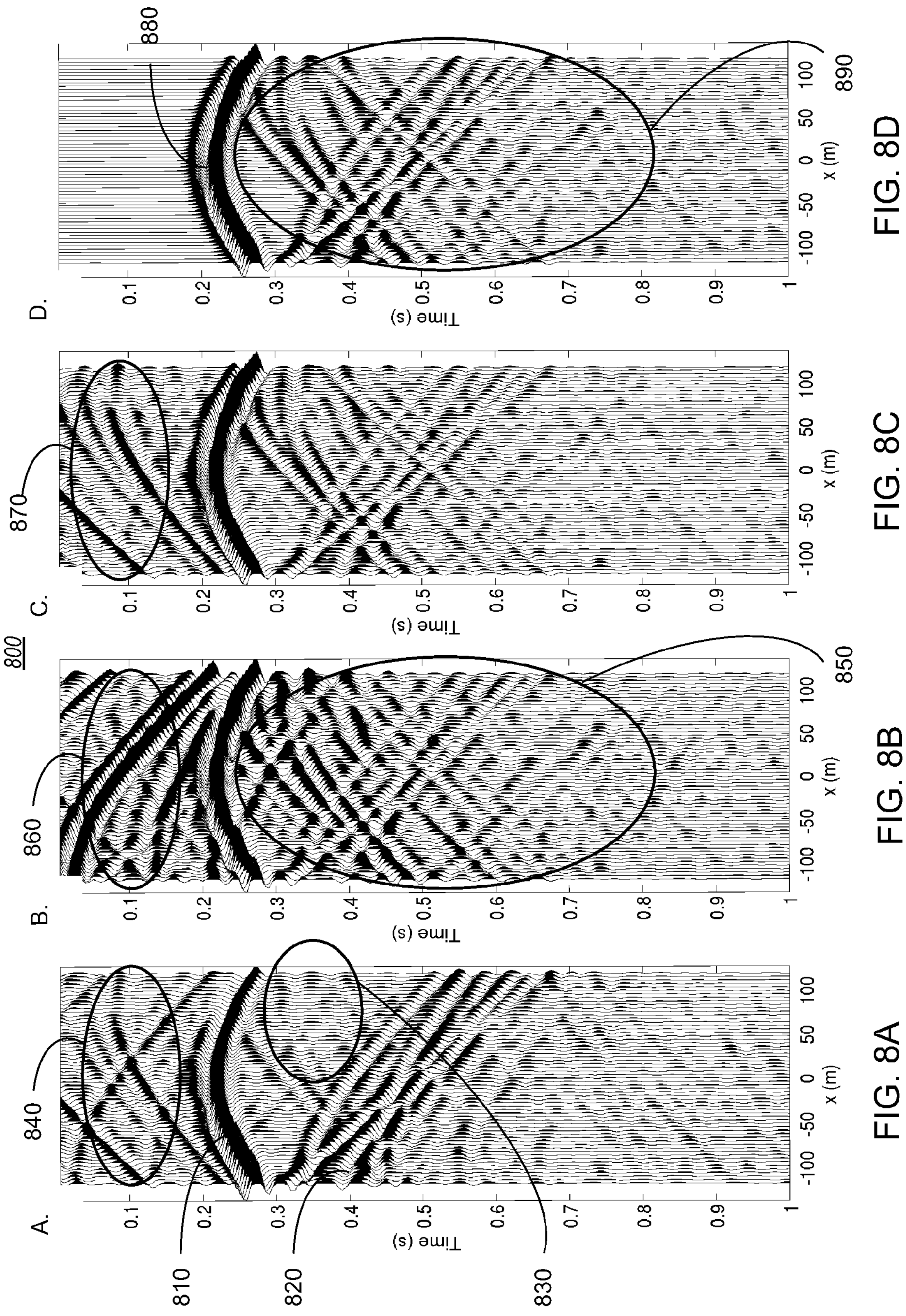


FIG. 8A

FIG. 8B

FIG. 8C

FIG. 8D

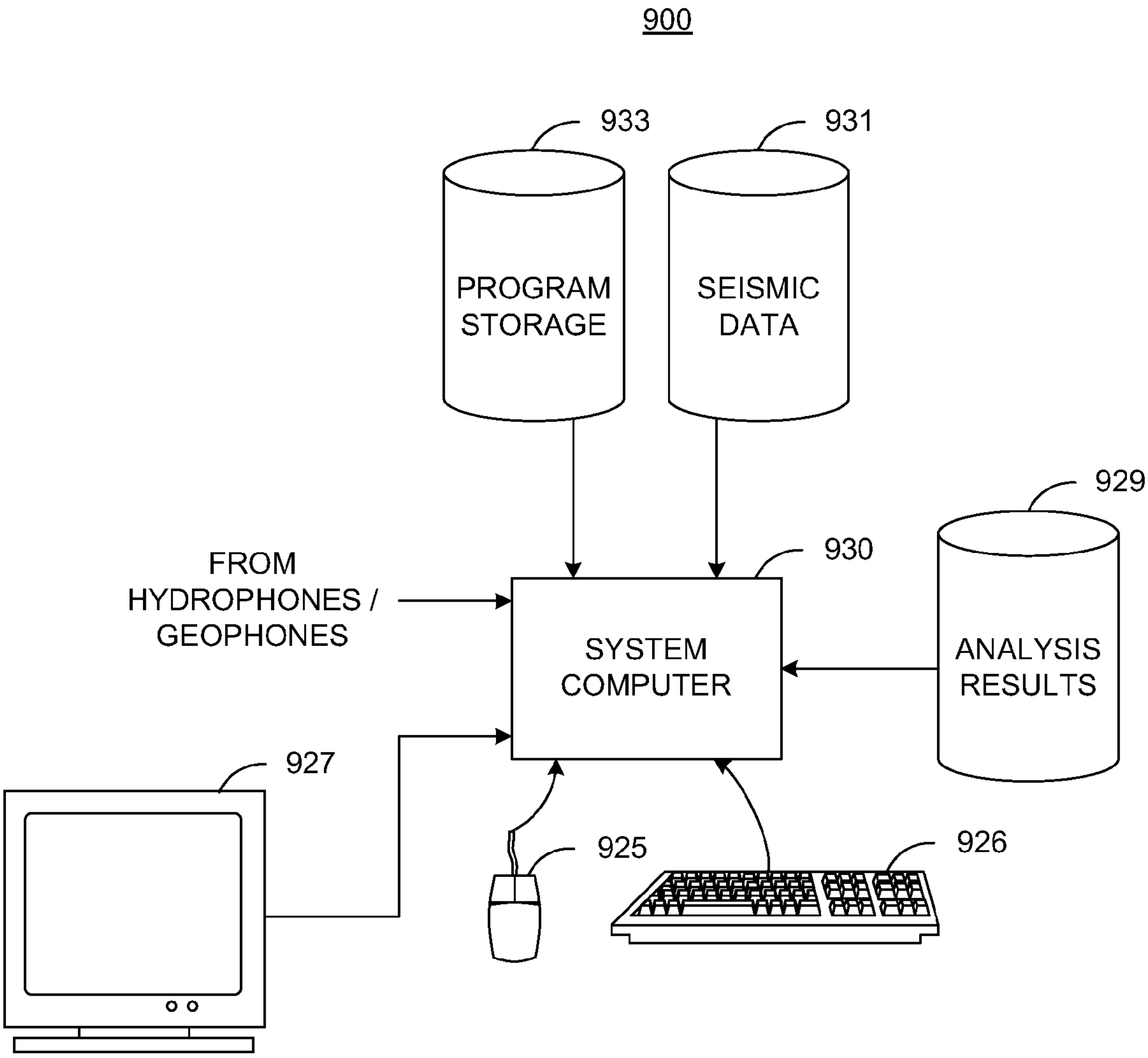
900
933
931
PROGRAM
STORAGE
SEISMIC
DATA
929
930
FROM
HYDROPHONES /
GEOPHONES
SYSTEM
COMPUTER
ANALYSIS
RESULTS
927
925
926

FIG. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 61099845 A